# FASCICULE DE BREVET EUROPEEN

(11) **EP 4 185 775 B1**
(45) Date de publication et mention de la délivrance du brevet: **28.08.2024**
(21) Numéro de dépôt: 21755523.4
(22) Date de dépôt: 16.07.2021
(51) Int. Cl.: F04D 7/02, F04D 29/041, F04D 29/22, F04D 29/62, F02K 9/46

(54) **POMPE À CARBURANT AMÉLIORÉE POUR MOTEUR D'AÉRONEF**
VERBESSERTE KRAFTSTOFFPUMPE FÜR FLUGZEUGTRIEBWERK
IMPROVED AIRCRAFT ENGINE FUEL PUMP

(30) Priorité: 24.07.2020 FR 2007836
(43) Date de publication de la demande: 31.05.2023
(73) Titulaire: SAFRAN AIRCRAFT ENGINES, 75015 Paris (FR)
(72) Inventeur: TOMOV, Petar Dimitrov, 77550 MOISSY-CRAMAYEL (FR); PORA, Loïc, 77550 MOISSY-CRAMAYEL (FR); LOVAL, Sébastien Christophe, 77550 MOISSY-CRAMAYEL (FR)
(74) Mandataire: Cabinet Beau de Loménie
(86) Numéro de dépôt international: PCT/FR2021/051338
(87) Numéro de publication internationale: WO 2022/018368

(56) Documents cités:
- EP-A1- 1 988 292
- US-A1- 2007 224 047
- US-A1- 2008 080 965

## Description

### Domaine Technique

Le présent exposé concerne le domaine technique des pompes à carburant. En particulier, le présent exposé concerne une pompe à carburant pour moteur d'aéronef, et un aéronef comprenant une telle pompe.

### Technique antérieure

La pompe à carburant est l'un des éléments principaux de régulation d'un moteur d'aéronef, notamment d'un moteur d'avion. Elle permet d'alimenter en carburant la chambre de combustion depuis les réservoirs de l'avion. Son débit et sa pression sert également à générer la puissance hydraulique permettant d'actionner les géométries variables du moteur.

Les pompes principales comprennent généralement un étage basse pression (BP) et un étage haute pression (HP). L'étage BP est généralement constitué d'un inducteur et d'un rouet centrifuge, ainsi qu'une volute. L'étage HP d'une pompe principale à carburant est généralement constitué d'une pompe à engrenages externes entraînée mécaniquement par un arbre du boîtier de transmission de puissance du moteur.

De manière générale, une pompe à carburant est dimensionnée pour les conditions qui exigent de garantir un débit supérieur au débit demandé pour toutes les conditions de fonctionnement. Actuellement, on utilise de manière connue, pour l'étage BP, une pompe centrifuge avec un inducteur et un rouet à aubages suivi par une volute.

Afin de garantir le bon fonctionnement de l'étage BP de la pompe à carburant, il est nécessaire de connaître et maîtriser les efforts hydrauliques générés pour différents points de fonctionnement. Ces efforts hydrauliques peuvent être divisés en deux parties : des efforts axiaux et des efforts radiaux.

Il est difficile de connaître les efforts axiaux, dans la mesure où le problème d'équilibrage est directement lié à la connaissance du champ de pression à la sortie de l'inducteur. Dans le cas où un inducteur est mis en place devant un rouet centrifuge, la pression engendrée par l'inducteur s'applique à l'arrière du rouet. Les efforts axiaux sont également liés au diamètre de l'inducteur. La diminution de ce dernier lui permet d'être moins sensible à des pressions mal maîtrisées. Cependant, la maîtrise des efforts reste primordiale pour le bon fonctionnement de l'étage BP de la pompe.

Ainsi, afin de faciliter l'équilibrage axial de l'étage BP de la pompe à carburant, il est connu d'utiliser des rouets centrifuges de type « ouvert », ne comprenant pas de flasque amont, qui disposent de trous dits « trous d'équilibrage ». Ces trous ont pour objectif de laisser passer le fluide de la zone haute pression vers la zone basse pression, de façon à diminuer les efforts axiaux.

Cependant, dans le cas d'une configuration avec un inducteur et un rouet de type « fermé », dont les aubes sont disposées entre un flasque amont, couvrant intégralement les aubes du rouet (du bord d'attaque au bord de fuite), et un flasque aval, les trous d'équilibrage peuvent se trouver entre les aubes de l'inducteur, ce qui rend la connaissance du champ de pression très difficile. De plus, la rotation du rouet cisaille l'écoulement, entraînant une perte de charge importante et variant selon les points de fonctionnement. Ces différents inconvénients nuisent aux performances de la pompe.

EP 1 988 292 A1 et US 2008/080965 A1 divulguent des pompes selon la technique antérieure.

Il existe donc un besoin, dans le cas des rouets de type « fermé », permettant de s'affranchir, au moins en partie, des inconvénients mentionnés ci-dessus.

### Exposé de l'invention

Le présent exposé concerne une pompe à carburant pour moteur d'aéronef, comprenant :
- un inducteur comprenant un axe de rotation,
- un rouet centrifuge de type fermé, coaxial avec l'inducteur, l'inducteur étant fixé au rouet centrifuge en amont de celui-ci de manière à définir une interface annulaire entre l'inducteur et le rouet autour de l'axe de rotation, l'interface annulaire comprenant un espace annulaire espaçant axialement l'inducteur et le rouet, et deux portions de contact entre l'inducteur et le rouet disposées radialement à l'extérieur de l'espace annulaire, une première chambre de tranquillisation et une deuxième chambre de tranquillisation, dans lesquelles l'inducteur et le rouet sont espacés axialement l'un de l'autre, étant chacune disposées circonférentiellement entre les deux portions de contact, les chambres de tranquillisation étant symétriques l'une par rapport à l'autre par rapport à l'axe de rotation et en communication fluidique avec l'espace annulaire,
le rouet comprenant une pluralité de trous d'équilibrage axiaux répartis circonférentiellement autour de l'axe de rotation et débouchant dans l'espace annulaire à une extrémité, et dans un espace aval du rouet à l'autre extrémité.

Dans certains modes de réalisation, un flasque amont est fixé sur le rouet en amont de celui-ci de manière à recouvrir au moins partiellement les aubes du rouet.

De manière générale, une direction axiale correspond à l'axe de rotation de la pompe à carburant, et une direction radiale est une direction perpendiculaire à cet axe de rotation. La direction circonférentielle correspond à la direction décrivant un anneau autour de la direction axiale. En outre, l'amont et l'aval sont définis par rapport au sens d'écoulement normal du fluide (de l'amont vers l'aval) à travers la pompe, le fluide atteignant d'abord l'inducteur, puis le rouet. Enfin, sauf précision contraire, les adjectifs intérieur et extérieur sont utilisés en référence à une direction radiale de sorte que la partie intérieure (i.e. radialement intérieure) d'un élément est plus proche de l'axe de rotation que la partie extérieure (i.e. radialement extérieure) du même élément.

De préférence, le rouet et l'inducteur comprennent chacun un orifice coaxial à l'axe de rotation. Un moyen de fixation axiale est disposé à travers les orifices du rouet et de l'inducteur respectivement, permettant de fixer axialement le rouet et l'inducteur entre eux. Par exemple, une vis filetée peut être insérée à travers l'orifice de l'inducteur et du rouet, et vissée dans un trou taraudé disposé dans le rouet. Par ailleurs, l'ensemble peut être entraîné par un arbre de rotation via des cannelures, ces dernières se trouvant sur le rouet. Le profil des cannelures peut être choisi en fonction du besoin.

Ainsi, lorsque l'inducteur et le rouet sont fixés ensemble, une interface annulaire entre ces deux pièces est formée, cette interface présentant sensiblement la forme d'un anneau entourant l'axe de rotation, en d'autres termes le moyen de fixation axiale.

L'inducteur et le rouet ne sont pas en contact sur toute la surface de l'interface annulaire. L'interface annulaire comprend un espace annulaire dans lequel le rouet et l'interface ne sont pas en contact, mais sont espacés l'un de l'autre axialement. L'espace annulaire s'étend de préférence sur toute la circonférence de l'interface autour de l'axe de rotation, mais pas sur toute la largeur radiale de l'interface annulaire, la surface de l'interface annulaire comprenant également des portions de contact.

Les portions de contact sont disposées radialement à l'extérieur de l'espace annulaire. En d'autres termes, les portions de contact entourent au moins partiellement l'espace annulaire.

La surface de contact entre l'inducteur et le rouet est donc discontinue. En d'autres termes, l'inducteur et le rouet ne sont pas en contact l'un avec l'autre sur toute la circonférence de l'interface. Plus précisément, l'inducteur et le rouet ne sont en contact au niveau de l'interface annulaire, que par l'intermédiaire des portions de contact, ce contact étant axial. Ainsi, deux portions espacées, dans lesquelles l'inducteur et le rouet sont espacés axialement l'un de l'autre, sont formées chacune circonférentiellement entre les deux portions de contact. Ces portions espacées forment une première et une deuxième chambre de tranquillisation disposées radialement à l'extérieur de l'espace annulaire, de manière symétrique l'une par rapport à l'autre, par rapport à l'axe de rotation. Ce faisant, les portions de contact sont également disposées symétriquement l'une par rapport à l'autre par rapport à l'axe de rotation.

Par ailleurs, les trous d'équilibrage axiaux sont disposés dans le rouet de manière à travers axialement celui-ci, ces trous étant disposés radialement à l'intérieur des portions de contact et des chambres de tranquillisation, de manière à déboucher dans l'espace annulaire.

Ainsi, un fluide de recirculation, provenant de l'inducteur et du rouet et revenant dans l'espace en aval du rouet, peut être réinjecté dans l'espace annulaire via les trous d'équilibrage. Ces derniers permettent ainsi d'équilibrer les pressions entre l'amont et l'aval du rouet, et ainsi diminuer les efforts axiaux.

En outre, le fluide présent dans l'espace annulaire peut être éjecté radialement hors de cet espace annulaire par l'intermédiaire des chambres de tranquillisation. Ces dernières permettent de tranquilliser l'écoulement transversal en uniformisant notamment le champ des vitesses. Plus précisément, les chambres de tranquillisation permettent de limiter les turbulences et le cisaillement du fluide traversant les trous d'équilibrage, engendrés par la rotation du rouet, avant que le fluide n'atteigne la région aval de l'inducteur.

Le fait de tranquilliser cet écoulement transversal avant qu'il ne rejoigne l'écoulement principal sortant de l'inducteur permet de diminuer l'impact de cet écoulement transversal sur le champ de pression, et par conséquent sur le champ de vitesse entre l'inducteur et le rouet centrifuge.

De plus, la disposition symétrique des chambres de tranquillisation permet d'uniformiser la pression du fluide s'échappant par ces chambres, limitant ainsi davantage l'impact sur l'écoulement principal, c'est-à-dire le fluide s'écoulant de l'amont vers l'aval entre l'inducteur et le rouet.

Dans certains modes de réalisation, la première et la deuxième chambre de tranquillisation s'étendent chacune circonférentiellement sur au moins un quart de la circonférence de l'interface annulaire.

Cette configuration permet de maximiser l'effet de tranquillisation du fluide sortant des trous d'équilibrage et éjecté radialement vers l'extérieur du rouet, tout en conservant une surface de contact suffisante entre l'inducteur et le rouet permettant une bonne stabilité structurelle de l'ensemble.

Dans certains modes de réalisation, l'inducteur comprend une première surface annulaire comprenant deux premières portions surélevées faisant saillies axialement par rapport au reste de la première surface annulaire, les premières portions surélevées étant symétriques l'une par rapport à l'autre par rapport à l'axe de rotation et étant en contact avec une deuxième surface annulaire du rouet, lorsque le rouet et l'inducteur sont fixés ensemble.

Le contact entre les premières portions surélevées de l'inducteur et la deuxième surface annulaire du rouet correspondent aux portions de contact, et forment ainsi une surface de contact annulaire discontinue entre l'inducteur et le rouet.

Dans certains modes de réalisation, la deuxième surface annulaire du rouet comprend deux deuxièmes portions surélevées faisant saillies axialement par rapport au reste de la deuxième surface annulaire, les deuxièmes portions surélevées étant symétriques l'une par rapport à l'autre par rapport à l'axe de rotation et étant disposées circonférentiellement entre les premières portions surélevées lorsque le rouet et l'inducteur sont fixés ensemble.

En d'autres termes, les premières portions surélevées forment entre elles deux intervalles dans chacun desquels est disposée une deuxième portion surélevée, et les deuxièmes portions surélevées forment également entre elles deux intervalles dans chacun desquels est disposée une première portion surélevée. Les première et deuxième portions surélevées sont ainsi imbriquées les unes dans les autres. Cette configuration permet de limiter un déplacement circonférentiel relatif de l'inducteur par rapport au rouet autour de l'axe de rotation.

De préférence, une longueur de l'arc formé par chaque première portion surélevée est sensiblement égale à une longueur de l'intervalle entre deux deuxièmes portions surélevées. De même, une longueur de l'arc formé par chaque deuxième portion surélevée est sensiblement égale à une longueur de l'intervalle entre deux premières portions surélevées. Cette configuration permet de limiter davantage un déplacement circonférentiel relatif de l'inducteur par rapport au rouet autour de l'axe de rotation.

Dans certains modes de réalisation, une hauteur des premières portions surélevées est supérieure à une hauteur des deuxièmes portions surélevées, de manière à ce que les premières portions surélevées soient en contact avec la deuxième surface annulaire du rouet, et à ce que les deuxièmes portions surélevées ne soient pas en contact avec la première surface annulaire de l'inducteur.

Selon cette configuration, lorsque l'inducteur et le rouet sont fixés l'un à l'autre, les premières portions surélevées de l'inducteur sont en butée contre la deuxième surface annulaire du rouet, mais un espace demeure entre les deuxièmes portions surélevées du rouet et la première surface annulaire de l'inducteur. Ces espaces forment la première et la deuxième chambre de tranquillisation. La mise en oeuvre de ces chambres de tranquillisation est ainsi simple à réaliser et peu coûteuse.

De manière alternative, dans certains modes de réalisation, une hauteur des deuxièmes portions surélevées est supérieure à une hauteur des premières portions surélevées, de manière à ce que les deuxièmes portions surélevées soient en contact avec la première surface annulaire de l'inducteur, et à ce que les premières portions surélevées ne soient pas en contact avec la deuxième surface annulaire du rouet.

Dans certains modes de réalisation, les trous d'équilibrage sont répartis circonférentiellement à intervalles réguliers autour de l'axe de rotation.

Cette configuration permet d'uniformiser la répartition du fluide de recirculation remontant depuis l'espace en aval du rouet jusqu'à l'amont du rouet, permettant ainsi d'améliorer l'efficacité de l'équilibrage des pressions entre l'amont et l'aval du rouet.

Dans certains modes de réalisation, le rouet centrifuge comprend seize trous d'équilibrage axiaux.

La présence de seize trous d'équilibrage permet de transférer un volume important de fluide de recirculation de l'aval vers l'amont du rouet, améliorant ainsi l'équilibrage des pressions entre l'amont et l'aval du rouet.

Dans certains modes de réalisation, une distance entre les trous d'équilibrage et l'axe principal est inférieure à 20%, de préférence inférieure à 15%, de préférence encore inférieure à 10% du rayon du rouet.

Le fait de disposer les trous d'équilibrage le plus près possible de l'axe de rotation, et donc le plus loin possible de l'écoulement principal de fluide sortant de l'inducteur permet de diminuer l'effet de cisaillement du fluide sortant des trous d'équilibrage sur cet écoulement principal. Cela permet de diminuer les pertes de charge, et d'améliorer ainsi les performances de la pompe.

Dans certains modes de réalisation, un rapport L/D entre une longueur L et un diamètre D des trous d'équilibrage est supérieur ou égal à 2.

En particulier, des valeurs de ce rapport supérieures ou égales à 2 permettent d'obtenir un coefficient de décharge sensiblement constant et égal à 0.8, permettant de maximiser le volume de fluide transféré depuis l'espace aval du rouet vers l'amont du rouet, tout en minimisant les pertes de charge.

Le présent exposé concerne également un aéronef comprenant la pompe selon l'un quelconque des modes de réalisation précédents.

L'aéronef peut être notamment un avion ou un hélicoptère.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue en perspective d'une pompe à carburant selon un mode de réalisation du présent exposé,
[Fig. 2] La figure 2 est une vue éclatée de la pompe à carburant de la figure 1,
[Fig. 3] La figure 3 représente une vue en coupe, selon un plan de coupe A de la pompe centrifuge de la figure 1,
[Fig. 4] La figure 4 représente une vue de dessus du rouet centrifuge de la pompe centrifuge de la figure 3, dans le plan B-B,
[Fig. 5] La figure 5 représente une vue en perspective du dessous d'un inducteur de la pompe à carburant de la figure 1,
[Fig. 6] La figure 6 représente une vue en perspective d'une pompe à carburant selon un mode de réalisation du présent exposé dans laquelle le flasque amont est masqué et une chambre de tranquillisation est visible.

### Description des modes de réalisation

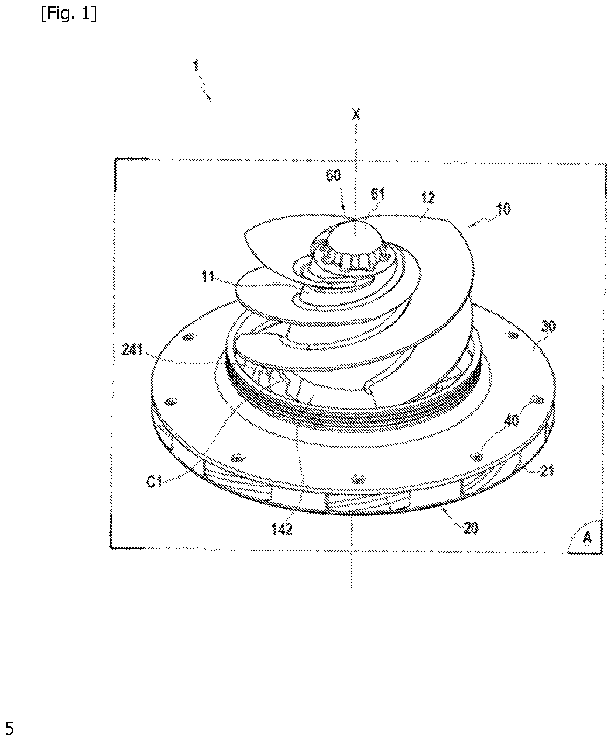

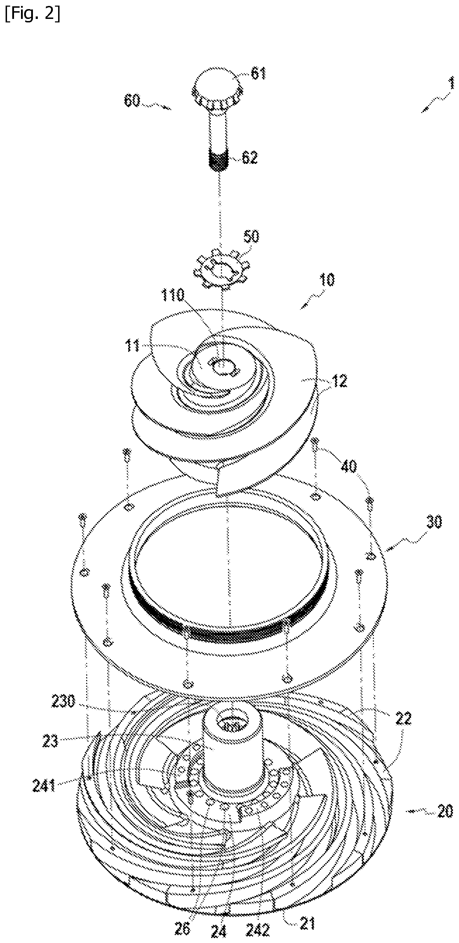

Une pompe à carburant selon un mode de réalisation de l'invention va être décrite dans la suite de la description en référence aux figures 1 à 6.

La figure 1 représente une vue en perspective d'un exemple de pompe à carburant 1. Plus précisément, elle représente un étage basse pression d'une telle pompe, s'étendant autour d'un axe X de rotation, et pouvant tourner autour de cet axe. L'environnement de cet ensemble (volute, étage hausse pression, etc.) n'est pas représenté.

Cet étage basse pression comprend un inducteur 10 et un rouet centrifuge 20 fixé à l'inducteur 10, en aval de celui-ci.

L'inducteur 10 comprend un moyeu 11 tubulaire, depuis lequel s'étendent radialement une pluralité d'aubes 12. Une extrémité amont du moyeu 10 comprend un orifice 110, à travers lequel un moyen de fixation, par exemple une vis filetée 60, est insérée.

Le rouet centrifuge 20 comprend un corps principal 21, depuis lequel s'étendent axialement vers l'amont, et radialement vers l'extérieur, une pluralité d'aubes 22. Le rouet 20 comprend dans sa partie centrale une portion tubulaire 23 destinée à s'insérer à l'intérieur d'une cavité 13 formée à l'intérieur du moyeu tubulaire 11 de l'inducteur 10, créant ainsi une surface de contact cylindrique entre l'inducteur 10 et le rouet 20. De plus, la portion tubulaire 23 du rouet 20 comprend en son centre un orifice 230 disposé coaxialement à l'orifice 110 du moyeu 11 de l'inducteur 10, les orifices 110 et 230 étant eux-mêmes coaxiaux avec l'axe de rotation X. L'orifice 230 est également configuré pour recevoir la vis filetée 60. Une face radialement externe de l'extrémité aval du rouet 20 peut comprendre des joints labyrinthes, permettant d'assurer l'étanchéité entre l'extrémité aval du rouet 20 et un carter de la pompe (non illustré).

Plus précisément, la vis filetée 60 comprend une tête de vis 61 prenant appui contre l'extrémité amont du moyeu 11, une rondelle d'appui 50 étant intercalée entre la tête de vis 61 et ladite extrémité amont. Une extrémité aval de la tige de la vis 60 est disposée dans la portion tubulaire 23 du rouet 20, et comprend une portion filetée 62, configurée pour se visser avec une portion taraudée disposée dans ladite portion tubulaire 23. L'inducteur 10 et le rouet centrifuge 20 sont ainsi fixés axialement l'un à l'autre. L'ensemble peut être entraîné par un arbre de rotation via des cannelures (non visibles sur les figures).

Un flasque amont 30 est également fixé sur le rouet centrifuge 20 en amont de celui-ci, par l'intermédiaire d'une pluralité de vis 40. Ce flasque amont 30 permet de couvrir au moins partiellement les aubes 22 du rouet 20, formant ainsi une enceinte fermée entre ledit flasque 30 et le corps principal 21 du rouet 20. Par « fermée », on comprend que les aubes 22 du rouet 20 sont enfermées axialement au moins partiellement entre le flasque 30 et le corps principal 21, et ainsi au moins partiellement isolées de l'amont et de l'aval du rouet 20, par le flasque 30 et le corps principal 21 respectivement. Une extrémité radialement externe du flasque 30 peut également comprendre des joints labyrinthes, permettant d'assurer l'étanchéité entre le flasque 30 et un carter de la pompe (non illustré).

Outre l'interface cylindrique mentionnée plus haut, une interface annulaire existe entre l'inducteur 10 et le rouet centrifuge 20 lorsque ces deux pièces sont fixées ensemble.

Plus précisément, l'inducteur 10 comprend une première surface annulaire 14 formée à l'extrémité aval du moyeu 11 de l'inducteur 10, et entourant l'extrémité de la cavité 13. De la même façon, le rouet centrifuge 20 comprend une deuxième surface annulaire 24 formée à l'extrémité amont du corps principal 21 du rouet 20 et entourant la portion tubulaire 23. Lorsque l'inducteur 10 et le rouet 20 sont fixés l'un avec l'autre, la première surface annulaire 14 et la deuxième surface annulaire 24 sont en vis-à-vis l'une de l'autre selon la direction axiale. Certaines portions de ces surfaces 14, 24 sont en contact les unes avec les autres, et d'autres portions de ces surfaces sont espacées les unes des autres, de la manière décrite ci-dessous.

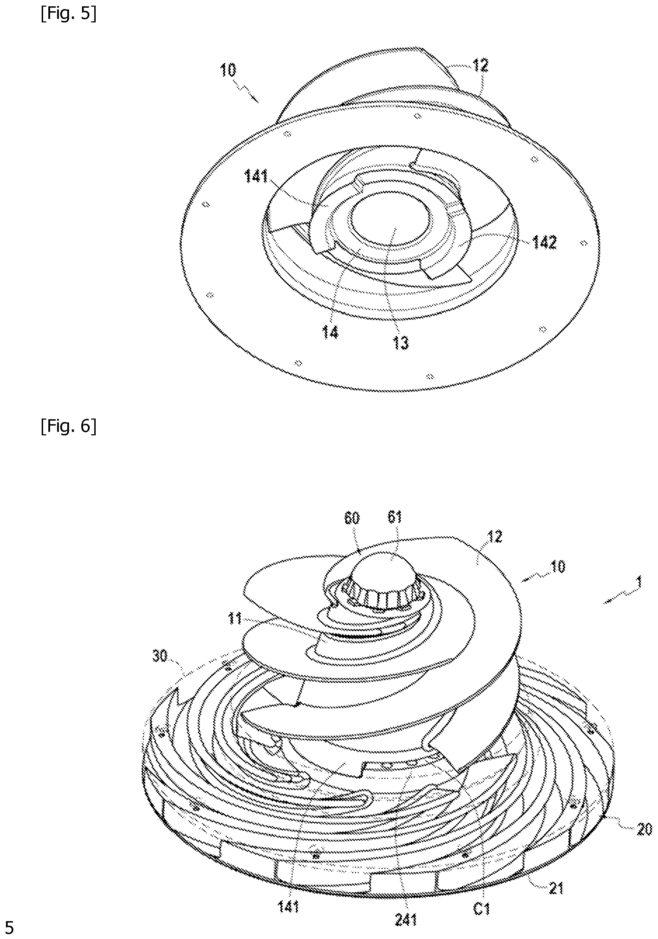

La première surface annulaire 14 de l'inducteur 10 comprend deux premières portions surélevées 141, 142, s'étendant axialement par rapport au reste de la première surface annulaire 14. Ces portions surélevées présentent la forme de crénelures en forme d'arc faisant saillie depuis le reste de la première surface annulaire 14, et s'étendant circonférentiellement, et de manière axisymétrique par rapport à l'axe central X, mais sur une partie seulement de la circonférence de la première surface annulaire 14. Les premières portions surélevées 141, 142 forment chacune un arc de cercle de dimension sensiblement égale au quart de la circonférence totale de la première surface annulaire 14. En outre, les premières portions surélevées 141, 142 sont disposées symétriquement l'une par rapport à l'autre, par rapport à l'axe central X. Dans l'exemple illustré sur la figure 5, les portions de la première surface annulaire 14, autres que les portions surélevées 141, 142, sont représentées sur deux niveaux différents. Cet exemple n'est cependant pas limitatif, cette surface pouvant être uniforme. On notera en outre que les portions surélevées 141, 142 ne s'étendent pas radialement sur toute la largeur de la première surface annulaire 14, mais sont disposées à une extrémité radiale externe de celle-ci, de manière à laisser un espace entre ces portions surélevées 141, 142, et la cavité 13. Cet espace permet de créer l'espace annulaire E décrit plus loin, lorsque l'inducteur est fixé au rouet 20.

La deuxième surface annulaire 24 du rouet centrifuge 20 comprend deux deuxièmes portions surélevées 241, 242, s'étendant axialement par rapport au reste de la deuxième surface annulaire 24. Les deuxièmes portions surélevées 241, 242 présentent sensiblement les mêmes caractéristiques que les premières portions surélevées 141, 142, et ne seront pas décrites à nouveau. Néanmoins, les deuxièmes portions surélevées 241, 242 diffèrent des premières portions surélevées 141, 142 en ce que leur dimension suivant la direction axiale est inférieure. En d'autres, les deuxièmes portions surélevées 241, 242 font saillie axialement vers l'amont sur une distance inférieure à la distance sur laquelle les premières portions surélevées 141, 142 font saillie axialement vers l'aval.

Ainsi, lorsque l'inducteur 10 et le rouet 20 sont fixés l'un avec l'autre, les premières portions surélevées 141, 142, insérées respectivement entre les deux deuxièmes portions surélevées 241, 242, viennent en butée contre la deuxième surface annulaire 24 du rouet 20, formant ainsi une surface de contact annulaire discontinue autour de l'axe de rotation X. A l'inverse, un espace demeure entre les deuxièmes portions surélevées 241, 242, insérées respectivement entre les deux premières portions surélevées 141, 142, et la première surface annulaire 14. Les deux espaces ainsi créés forment une première chambre de tranquillisation C1 et une deuxième chambre de tranquillisation C2, de forme et de dimensions identiques l'une de l'autre, et disposées symétriquement l'une par rapport à l'autre par rapport à l'axe de rotation X.

Cet exemple n'est cependant pas limitatif, les deuxièmes portions surélevées 241, 242 pouvant de manière alternative être axialement plus longues que les premières portions surélevées 141, 142, permettant également d'obtenir deux chambres de tranquillisation C1 et C2.

Par ailleurs, la portion de la première surface annulaire 14 disposée radialement à l'intérieur des premières portions surélevées 141, 142 forme, avec la portion de la deuxième surface annulaire 24 disposée radialement à l'intérieur des deuxièmes portions surélevées 241, 242, un espace annulaire E, lorsque l'inducteur 10 et le rouet 20 sont fixés ensemble. Cet espace annulaire E est disposé radialement à l'intérieur des premières portions surélevées 141, 142, des deuxièmes portions surélevées 241, 242, et des chambres de tranquillisation C1, C2, et entoure la portion tubulaire 23 du rouet 20, sur toute la circonférence de celle-ci. L'épaisseur axiale de cet espace annulaire E est supérieure à l'épaisseur axiale des chambres de tranquillisation C1 et C2.

Le rouet centrifuge 20 comprend en outre une pluralité de trous d'équilibrage 16, répartis circonférentiellement et à intervalles réguliers autour de l'axe de rotation X. Ces orifices sont disposés radialement entre les deuxièmes portions surélevées 241, 242 et la portion tubulaire 13. Ils s'étendent axialement à travers toute l'épaisseur du corps principal 21 du rouet 20, sur une longueur L, de telle manière qu'une première extrémité de chacun de ces trous 26 débouche dans un espace aval 70, en aval du rouet 20, et une deuxième extrémité débouche dans l'espace annulaire E. Les trous d'équilibrage 16 présentent un diamètre D, déterminé de manière à ce que le rapport L/D soit supérieur ou égale à 2. Selon ce mode de réalisation, le rouet 20 comprend seize trous d'équilibrage 26. Cet exemple n'est cependant pas limitatif, et peut être adapté en fonction des dimensions du rouet 20.

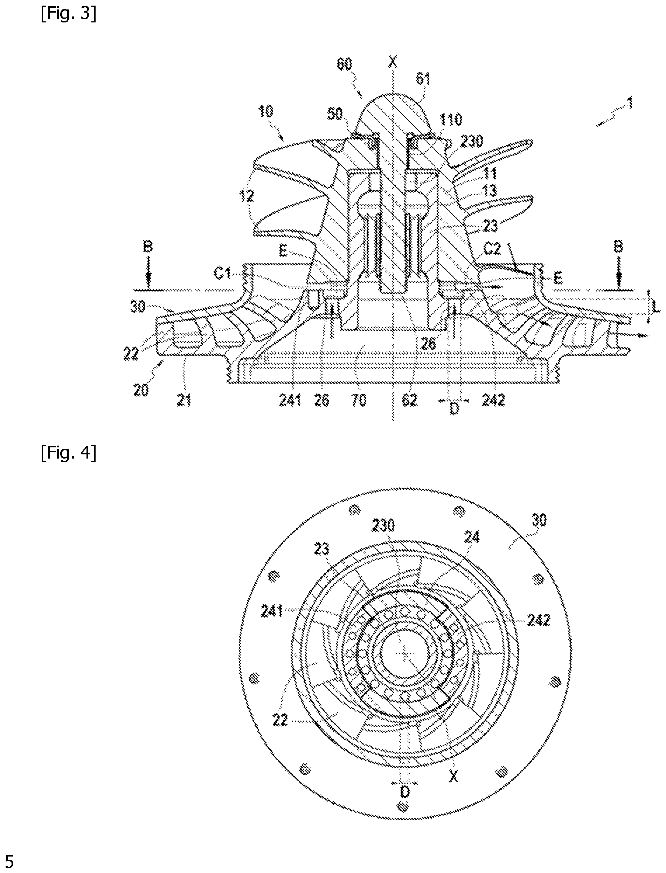

La figure 3 illustre le trajet suivi par le fluide, par exemple un liquide, s'écoulant dans la pompe centrifuge 1 (cf. flèches noires sur la figure 3). Le fluide s'écoule dans un premier temps dans l'inducteur 10, puis dans le rouet centrifuge 20. L'écoulement le long de l'inducteur 10 et du rouet 20 est l'écoulement principal. Le fluide est ensuite évacué dans une volute (non représenté). Une portion de ce fluide, dit « fluide de recirculation », peut également remonter jusqu'à l'espace aval 70. Ce fluide peut alors être transféré depuis cet espace aval 70 vers l'espace annulaire E par l'intermédiaire des trous d'équilibrage 26, puis être éjecté radialement depuis cet espace annulaire E vers l'écoulement principal, au niveau de la sortie de l'inducteur 10, en passant par les chambres de tranquillisation C1 et C2. Le passage du fluide par ces chambres de tranquillisation C1 et C2 permet de tranquilliser cet écoulement transversal, limitant ainsi l'effet de cisaillement généré sur l'écoulement principal. On notera qu'une portion du fluide (non représentée) sortant du rouet 20 peut également remonter du rouet 20 vers l'inducteur 10, le long de la paroi externe du flasque 30. Cette portion est par la suite aspirée par l'inducteur 10 et le rouet 20, dans l'écoulement principal.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Pompe à carburant (1) pour moteur d'aéronef, comprenant :
- un inducteur (10) comprenant un axe de rotation (X),
- un rouet centrifuge (20) de type fermé, coaxial avec l'inducteur (10), l'inducteur (10) étant fixé au rouet centrifuge (20) en amont de celui-ci de manière à définir une interface annulaire entre l'inducteur (10) et le rouet (20) autour de l'axe de rotation (X),
l'interface annulaire comprenant un espace annulaire (E) espaçant axialement l'inducteur (10) et le rouet (20), et deux portions de contact (141, 142) entre l'inducteur (10) et le rouet (20) disposées radialement à l'extérieur de l'espace annulaire (E),
une première chambre de tranquillisation (C1) et une deuxième chambre de tranquillisation (C2), dans lesquelles l'inducteur (10) et le rouet (20) sont espacés axialement l'un de l'autre, étant chacune disposées circonférentiellement entre les deux portions de contact (141, 142), les chambres de tranquillisation (C1, C2) étant symétriques l'une par rapport à l'autre par rapport à l'axe de rotation (X) et en communication fluidique avec l'espace annulaire (E),
le rouet centrifuge (20) comprenant une pluralité de trous d'équilibrage (26) axiaux répartis circonférentiellement autour de l'axe de rotation (X) et débouchant dans l'espace annulaire (E) à une extrémité, et dans un espace aval (70) du rouet (20) à l'autre extrémité.

2. Pompe à carburant (1) selon la revendication 1, dans laquelle la première et la deuxième chambre de tranquillisation (C1, C2) s'étendent chacune circonférentiellement sur au moins un quart de la circonférence de l'interface annulaire.

3. Pompe à carburant (1) selon la revendication 1 ou 2, dans laquelle l'inducteur (10) comprend une première surface annulaire (14) comprenant deux premières portions surélevées (141, 142) faisant saillies axialement par rapport au reste de la première surface annulaire (14), les premières portions surélevées (141, 142) étant les portions de contact (141, 142) entre l'inducteur (10) et le rouet (20), étant symétriques l'une par rapport à l'autre par rapport à l'axe de rotation (X) et étant en contact avec une deuxième surface annulaire (24) du rouet (20), lorsque le rouet (20) et l'inducteur (10) sont fixés ensemble.

4. Pompe à carburant (1) selon la revendication 3, dans laquelle la deuxième surface annulaire (24) du rouet (20) comprend deux deuxièmes portions surélevées (241, 242) faisant saillies axialement par rapport au reste de la deuxième surface annulaire (24), les deuxièmes portions surélevées (241, 242) étant symétriques l'une par rapport à l'autre par rapport à l'axe de rotation (X) et étant disposées circonférentiellement entre les premières portions surélevées (141, 142) lorsque le rouet (20) et l'inducteur (10) sont fixés ensemble.

5. Pompe à carburant (1) selon la revendication 4, dans laquelle une hauteur des premières portions surélevées (141, 142) est supérieure à une hauteur des deuxièmes portions surélevées (241, 242), de manière à ce que les premières portions surélevées (141, 142) soient en contact avec la deuxième surface annulaire (24) du rouet (20), et à ce que les deuxièmes portions surélevées (241, 242) ne soient pas en contact avec la première surface annulaire (14) de l'inducteur (10).

6. Pompe à carburant (1) selon l'une quelconque des revendications 1 à 5, dans laquelle les trous d'équilibrage (26) sont répartis circonférentiellement à intervalles réguliers autour de l'axe de rotation (X).

7. Pompe à carburant (1) selon l'une quelconque des revendications 1 à 6, dans laquelle le rouet centrifuge (20) comprend seize trous d'équilibrage (26) axiaux.

8. Pompe à carburant (1) selon l'une quelconque des revendications 1 à 7, dans laquelle une distance entre les trous d'équilibrage (26) et l'axe de rotation (X) est inférieure à 20%, de préférence inférieure à 15%, de préférence encore inférieure à 10% du rayon du rouet (20).

9. Pompe à carburant (1) selon l'une quelconque des revendications 1 à 8, dans laquelle un rapport L/D entre une longueur L et un diamètre D des trous d'équilibrage (26) est supérieur ou égal à 2.

10. Aéronef comprenant la pompe selon l'une quelconque des revendications précédentes.

## Patentansprüche

1. Kraftstoffpumpe (1) für Flugzeugtriebwerk, umfassend:
- einen Induktor (10), der eine Drehachse (X) umfasst,
- ein Zentrifugalrad (20) vom geschlossenen Typ, das koaxial mit dem Induktor (10) ist, wobei der Induktor (10) derart an dem Zentrifugalrad (20) stromaufwärtig davon befestigt ist, dass eine ringförmige Grenzfläche zwischen dem Induktor (10) und dem Rad (20) um die Drehachse (X) herum definiert ist,
wobei die ringförmige Grenzfläche einen ringförmigen Raum (E), der den Induktor (10) und das Rad (20) axial beabstandet, und zwei Kontaktabschnitte (141, 142) zwischen dem Induktor (10) und dem Rad (20) umfasst, die radial und außerhalb des ringförmigen Raums (E) angeordnet sind,
eine erste Beruhigungskammer (C1) und eine zweite Beruhigungskammer (C2), wobei der Induktor (10) und das Rad (20) axial voneinander beabstandet sind und jeweils in Umfangsrichtung zwischen den zwei Kontaktabschnitten (141, 142) angeordnet sind, wobei die Beruhigungskammern (C1, C2) in Bezug auf die Drehachse (X) symmetrisch in Bezug aufeinander und in Fluidverbindung mit dem ringförmigen Raum (E) sind,
wobei das Zentrifugalrad (20) mehrere Ausgleichslöcher (26) umfasst, die axial in Umfangsrichtung um die Drehachse (X) herum verteilt sind und an einem Ende in den ringförmigen Raum (E) und an dem anderen Ende in einen Raum (70) stromabwärtig des Rades (20) münden.

2. Kraftstoffpumpe (1) nach Anspruch 1, wobei die erste und die zweite Beruhigungskammer (C1, C2) sich jeweils in Umfangsrichtung über mindestens ein Viertel des Umfangs der ringförmigen Grenzfläche erstrecken.

3. Kraftstoffpumpe (1) nach Anspruch 1 oder 2, wobei der Induktor (10) eine erste ringförmige Oberfläche (14) umfasst, die zwei erste hochliegende Abschnitte (141, 142) umfasst, die axial in Bezug auf den Rest der ersten ringförmigen Oberfläche (14) hervorstehen, wobei die ersten hochliegenden Abschnitte (141, 142) die Kontaktabschnitte (141, 142) zwischen dem Induktor (10) und dem Rad (20) sind, in Bezug auf die Drehachse (X) symmetrisch in Bezug aufeinander sind und mit einer zweiten ringförmigen Oberfläche (24) des Rades (20) in Kontakt sind, wenn das Rad (20) und der Induktor (10) zusammen befestigt sind.

4. Kraftstoffpumpe (1) nach Anspruch 3, wobei die zweite ringförmige Oberfläche (24) des Rades (20) zwei zweite hochstehende Abschnitte (241, 242) umfasst, die axial in Bezug auf den Rest der zweiten ringförmigen Oberfläche (24) hervorstehen, wobei die zweiten hochstehenden Abschnitte (241, 242) in Bezug auf die Drehachse (X) symmetrisch in Bezug aufeinander sind und in Umfangsrichtung zwischen den ersten hochstehenden Abschnitten (141, 142) angeordnet sind, wenn das Rad (20) und der Induktor (10) zusammen befestigt sind.

5. Kraftstoffpumpe (1) nach Anspruch 4, wobei eine Höhe der ersten hochstehenden Abschnitte (141, 142) größer als eine Höhe der zweiten hochstehenden Abschnitte (241, 242) ist, derart dass die ersten hochstehenden Abschnitte (141, 142) mit der zweiten ringförmigen Oberfläche (24) des Rades (20) in Kontakt sind, und derart dass die zweiten hochstehenden Abschnitte (241, 242) nicht mit der ersten ringförmigen Oberfläche (14) des Induktors (10) in Kontakt sind.

6. Kraftstoffpumpe (1) nach einem der Ansprüche 1 bis 5, wobei die Ausgleichslöcher (26) in Umfangsrichtung in regelmäßigen Intervallen um die Drehachse (X) herum verteilt sind.

7. Kraftstoffpumpe (1) nach einem der Ansprüche 1 bis 6, wobei das Zentrifugalrad (20) sechzehn axiale Ausgleichslöcher (26) umfasst.

8. Kraftstoffpumpe (1) nach einem der Ansprüche 1 bis 7, wobei ein Abstand zwischen den Ausgleichslöchern (26) und der Drehachse (X) kleiner als 20 %, vorzugsweise kleiner als 15 %, ferner vorzugsweise kleiner als 10 %, des Radius des Rades (20) ist.

9. Kraftstoffpumpe (1) nach einem der Ansprüche 1 bis 8, wobei ein Verhältnis L/D zwischen einer Länge L und einem Durchmesser D der Ausgleichslöcher (26) größer oder gleich 2 ist.

10. Flugzeug, das die Pumpe nach einem der vorhergehenden Ansprüche umfasst.

## Claims

1. A fuel pump (1) for an aircraft engine, comprising:
- an inducer (10) comprising an axis of rotation (X),
- a centrifugal impeller (20) of closed type, coaxial with the inducer (10), the inducer (10) being fixed to the centrifugal impeller (20) upstream thereof so as to define an annular interface between the inducer (10) and the impeller (20) about the axis of rotation (X), the annular interface comprising an annular space (E) spacing axially the inducer (10) and the impeller (20), and two contact portions (141, 142) between the inducer (10) and the impeller (20) disposed radially outside the annular space (E),
a first plenum chamber (C1) and a second plenum chamber (C2), in which the inducer (10) and the impeller (20) are spaced axially from each other, each being disposed circumferentially between the two contact portions (141, 142), the plenum chambers (C1, C2) being symmetrical to each other with respect to the axis of rotation (X) and in fluid communication with the annular space (E),
the centrifugal impeller (20) comprising a plurality of axial balancing holes (26) distributed circumferentially about the axis of rotation (X) and opening out into the annular space (E) at one end, and into a downstream space (70) of the impeller (20) at the other end.

2. The fuel pump (1) according to claim 1, wherein the first and second plenum chambers (C1, C2) each extend circumferentially over at least a quarter of the circumference of the annular interface.

3. The fuel pump (1) according to claim 1 or 2, wherein the inducer (10) comprises a first annular surface (14) comprising two first raised portions (141, 142) protruding axially with respect to the rest of the first annular surface (14), the first raised portions (141, 142) being the contact portions (141, 142) between the inducer (10) and the impeller (20), being symmetrical to each other with respect to the axis of rotation (X) and being in contact with a second annular surface (24) of the impeller (20), when the impeller (20) and the inducer (10) are fixed together.

4. The fuel pump (1) according to claim 3, wherein the second annular surface (24) of the impeller (20) comprises two second raised portions (241, 242) protruding axially with respect to the rest of the second annular surface (24), the second raised portions (241, 242) being symmetrical to each other with respect to the axis of rotation (X) and being disposed circumferentially between the first raised portions (141, 142) when the impeller (20) and the inducer (10) are fixed together.

5. The fuel pump (1) according to claim 4, wherein a height of the first raised portions (141, 142) is greater than a height of the second raised portions (241, 242), such that the first raised portions (141, 142) are in contact with the second annular surface (24) of the impeller (20), and such that the second raised portions (241, 242) are not in contact with the first annular surface (14) of the inducer (10).

6. The fuel pump (1) according to any one of claims 1 to 5, wherein the balancing holes (26) are distributed circumferentially at regular intervals about the axis of rotation (X).

7. The fuel pump (1) according to any one of claims 1 to 6, wherein the centrifugal impeller (20) comprises sixteen axial balancing holes (26).

8. The fuel pump (1) according to any one of claims 1 to 7, wherein a distance between the balancing holes (26) and the axis of rotation (X) is less than 20%, preferably less than 15%, more preferably less than 10% of the radius of the impeller (20).

9. The fuel pump (1) according to any one of claims 1 to 8, wherein a ratio L/D between a length L and a diameter D of the balancing holes (26) is greater than or equal to 2.

10. An aircraft comprising the pump according to any one of the preceding claims.
